(19) **Europäisches Patentamt / European Patent Office / Office européen des brevets**

(11) **EP 4 572 503 A1**

(12) **EUROPEAN PATENT APPLICATION**
published in accordance with Art. 153(4) EPC

(43) Date of publication:
**18.06.2025  Bulletin 2025/25**

(21) Application number: **23853035.6**

(22) Date of filing: **10.08.2023**

(51) International Patent Classification (IPC):
**H04W 74/00** (2009.01)      **H04W 74/08** (2024.01)
**H04L 5/00** (2006.01)       **H04L 5/14** (2006.01)
**H04B 7/0413** (2017.01)     **H04W 8/22** (2009.01)

(52) Cooperative Patent Classification (CPC):
**H04B 7/0413; H04L 5/00; H04L 5/14; H04W 8/22;
H04W 74/00; H04W 74/08**

(86) International application number:
**PCT/KR2023/011850**

(87) International publication number:
**WO 2024/035168 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.08.2022  KR 20220100874
19.08.2022  US 202263399241 P**

(71) Applicant: **LG Electronics Inc.
Yeongdeungpo-gu
Seoul 07336 (KR)**

(72) Inventors:
• **AHN, Seungjin**
  **Seoul 06772 (KR)**
• **LEE, Youngdae**
  **Seoul 06772 (KR)**
• **KIM, Jaehyung**
  **Seoul 06772 (KR)**
• **YANG, Suckchel**
  **Seoul 06772 (KR)**
• **KIM, Seonwook**
  **Seoul 06772 (KR)**
• **LEE, Sunghoon**
  **Seoul 06772 (KR)**

(74) Representative: **Plasseraud IP
104 Rue de Richelieu
CS92104
75080 Paris Cedex 02 (FR)**

(54) **DEVICE AND METHOD FOR USING LIMITED BANDWIDTH TO PERFORM COMMUNICATION IN WIRELESS COMMUNICATION SYSTEM**

(57)   The present disclosure relates to performing communication by using a limited bandwidth in a wireless communication system, and a method for operating a terminal may include performing a random access procedure, receiving information related to resource allocation for downlink communication, and receiving a downlink signal based on the resource allocation. The resource allocation is a plurality of non-contiguous resources in frequency domain, and a sum of resource blocks (RBs) of the plurality of resources may be equal to or smaller than a maximum number of RBs of the terminal.

```
        START
          │
          ▼                    S2001
PERFORM RANDOM ACCESS PROCEDURE
          │
          ▼                    S2003
RECEIVE INFORMATION RELATED
   TO RESOURCE ALLOCATION
          │
          ▼                    S2005
  RECEIVE DOWNLINK SIGNAL
          │
          ▼
         END
```

**FIG. 20**

**Description**

Technical Field

The present disclosure relates to a wireless communication system, and particularly, to an apparatus and method for performing communication by using a limited bandwidth in a wireless communication system.

Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

Disclosure

Technical Problem

The present disclosure may provide an apparatus and method for effectively performing communication by using a limited bandwidth in a wireless communication system.

The present disclosure may provide an apparatus and method for performing a random access procedure by considering use of a limited bandwidth in a wireless communication system.

The present disclosure may provide an apparatus and method for transmitting additional information by using message-2 (MSG2) during a random access procedure in a wireless communication system.

The present disclosure may provide an apparatus and method for transmitting additional information by using an uplink grant in a wireless communication system.

The present disclosure may provide an apparatus and method for transmitting additional information by using spare bits of a frequency domain resource allocation (FDRA) field within an uplink grant in a wireless communication system.

The present disclosure may provide an apparatus and method for transmitting additional information by using bits of a channel state information (CSI) request field within an uplink grant in a wireless communication system.

The present disclosure may provide an apparatus and method for notifying capability information of a terminal based on a random access channel (RACH) occasion and a RACH preamble in a wireless communication system.

The present disclosure may provide an apparatus and method for transmitting additional information by using message-3 (MSG3) during a random access procedure in a wireless communication system.

The present disclosure may provide an apparatus and method for indicating a plurality of non-contiguous resources in a wireless communication system.

The present disclosure may provide an apparatus and method for indicating a resource based on an offset for a specific channel in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Technical Solution

As an example of the present disclosure, a method for operating a terminal in a wireless communication system may include performing a random access procedure, receiving information related to resource allocation for downlink communication, and receiving a downlink signal based on the resource allocation. The resource allocation may be a plurality of non-contiguous resources in frequency domain, and a sum of resource blocks (RBs) of the plurality of resources may be equal to or smaller than a maximum number of RBs of the terminal.

As an example of the present disclosure, a method for operating a base station in a wireless communication system may include performing a random access procedure, transmitting information related to resource allocation for downlink communication, and transmitting a downlink signal to a terminal based on the resource allocation. The resource allocation may be a plurality of non-contiguous resources in frequency domain, and a sum of resource blocks (RBs) of the plurality of resources may be equal to or smaller than a maximum number of RBs of the terminal.

As an example of the present disclosure, a terminal in a wireless communication system may include a transceiver and a processor coupled with the transceiver. The processor may be configured to perform a random access procedure, to receive information related to resource allocation for downlink communication, and to receive a downlink signal based on the resource allocation. The resource allocation may be a plurality of non-contiguous resources in frequency domain, and a sum of resource blocks (RBs) of the plurality of resources may be equal to or smaller than a maximum number of RBs of the terminal.

As an example of the present disclosure, a base station in a wireless communication system may include a transceiver and a processor coupled with the transceiver. The processor may be configured to perform a random access procedure, to transmit information related to resource allocation for downlink communication, and to transmit a downlink signal to a terminal based on the resource allocation. The resource allocation may be a plurality of non-contiguous resources in frequency domain, and a sum of resource blocks (RBs) of the plurality of resources may be equal to or smaller than a maximum number of RBs of the terminal.

As an example of the present disclosure, a communication device may include at least one processor and at least one computer memory coupled with the at least one processor and storing an instruction that instructs operations when executed by the at least one processor. The operations may include performing a random access procedure, receiving information related to resource allocation for downlink communication, and receiving a downlink signal based on the resource allocation. The resource allocation may be a plurality of non-contiguous resources in frequency domain, and a sum of resource blocks (RBs) of the plurality of resources may be equal to or smaller than a maximum number of RBs of the terminal.

As an example of the present disclosure, a non-transitory computer-readable medium storing at least one instruction may comprise the at least one instruction that is executable by a processor. The at least one instruction may control a device to perform a random access procedure, to receive information related to resource allocation for downlink communication, and to receive a downlink signal based on the resource allocation. The resource allocation may be a plurality of non-contiguous resources in frequency domain, and a sum of resource blocks (RBs) of the plurality of resources may be equal to or smaller than a maximum number of RBs of the terminal.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

Advantageous Effects

As is apparent from the above description, the embodiments of the present disclosure have the following effects.

According to the present disclosure, a random access procedure may be improved.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8A illustrates an example of a contention-based random access (CBRA) procedure to which the present disclosure is applicable.

FIG. 8B illustrates an example of a contention free random access (CFRA) procedure to which the present disclosure is applicable.

FIG. 9 illustrates an example of a media access control (MAC) control element (CE) structure of message-2 (MSG2).

FIG. 10 illustrates an example of an uplink grant field structure of MSG2.

FIG. 11 illustrates a partitioning example of a shared channel bandwidth in a wireless communication system according to an embodiment of the present disclosure.

FIG. 12 illustrates an example of physical downlink/uplink shared channel (PxSCH)-bandwidth part (BWP) in a wireless communication system according to an embodiment of the present disclosure.

FIG. 13 illustrates an example of a channel bandwidth operation scheme for uplink and downlink in a wireless communication system according to an embodiment of the present disclosure.

FIG. 14 illustrates an example of a channel bandwidth (BW) or bandwidth part (BW(P)) of uplink and downlink in a wireless communication system according to an embodiment of the present disclosure.

FIG. 15 illustrates a configuration example of BW(P) of a specific channel in a wireless communication system according to an embodiment of the present disclosure.

FIG. 16 illustrates an example of allocation scheme of PxSCH in a wireless communication system according to an embodiment of the present disclosure.

FIG. 17 illustrates an example of a sounding reference signal (SRS) transmission scheme in a wireless communication system according to an embodiment of the present disclosure.

FIG. 18 illustrates an example for an operation scheme of new downlink control information (DCI) in a wireless communication system according to an embodiment of the present disclosure.

FIG. 19 illustrates an example for an operation scheme of new DCI in a wireless communication system according to an embodiment of the present disclosure.

FIG . 20 illustrates an example of a procedure of receiving a downlink signal in a wireless communication system according to an embodiment of the present disclosure.

FIG. 21 illustrates an example of a procedure of transmitting a downlink signal in a wireless communication system according to an embodiment of the present disclosure.

FIG. 22 illustrates an example of a procedure of transmitting additional information by using MSG2 of a random access procedure in a wireless communication system according to an embodiment of the present disclosure.

FIG. 23 illustrates an example of a procedure of exchanging terminal information by using a random access preamble in a wireless communication system according to an embodiment of the present disclosure.

FIG. 24 illustrates an example of a procedure of transmitting additional information by using message-3 (MSG3) of a random access procedure in a wireless communication system according to an embodiment of the present disclosure.

FIG. 25 illustrates an example of a procedure of indicating a bandwidth in a wireless communication system according to an embodiment of the present disclosure.

Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

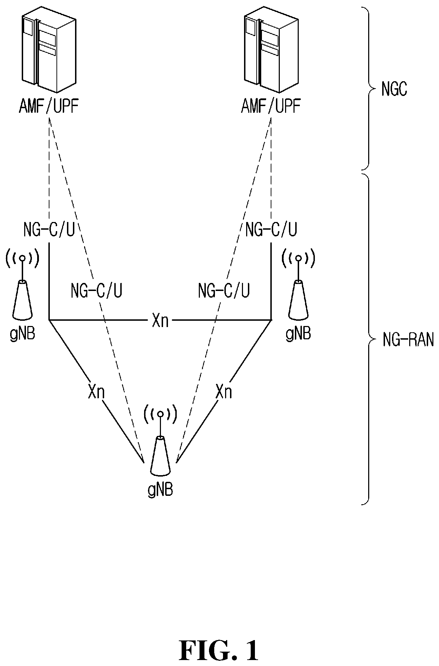

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

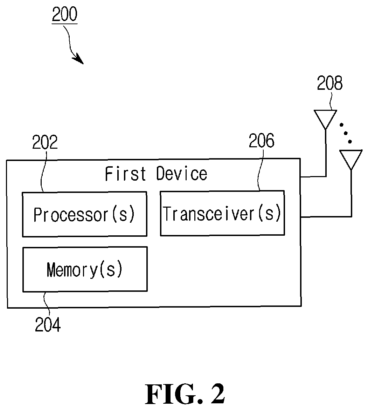

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be anAI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

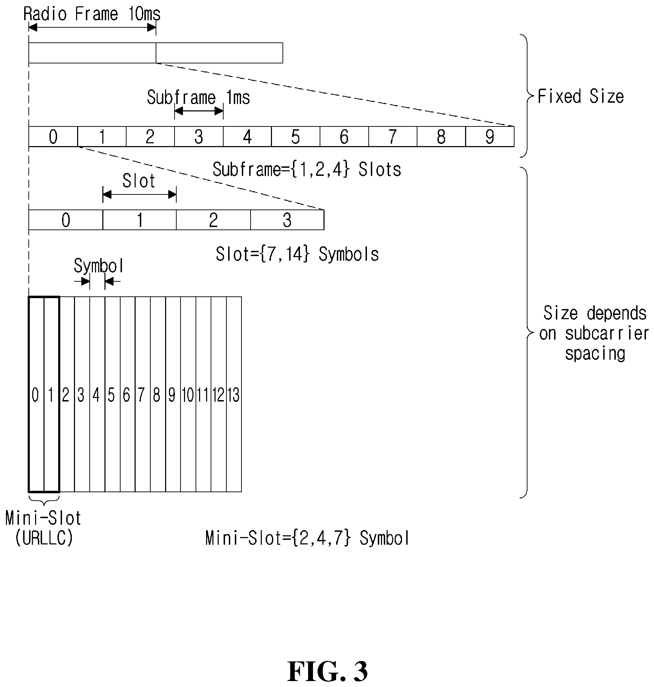

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise. An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0, \cdots, N_{slot}^{subframe,\mu} - 1\}$ in a subframe and are numbered in an increasing order of $n_{s,f}^\mu \in \{0, \cdots, N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that not all OFDM symbols of a downlink slot or an uplink slot are available. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

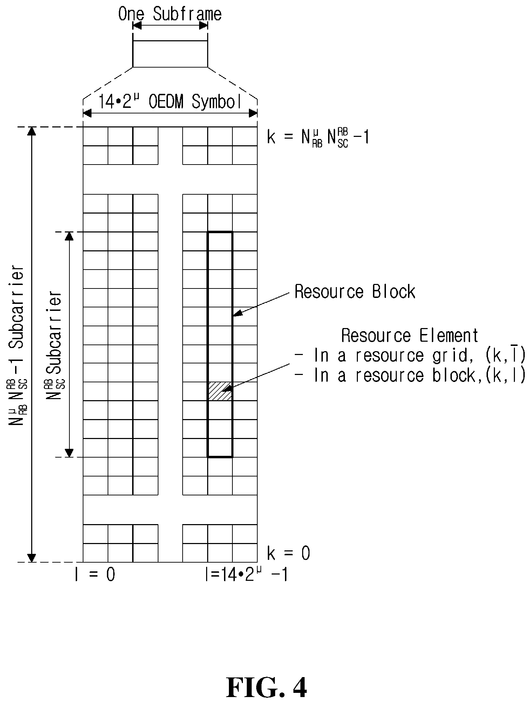

FIG. 4 exemplifies a resource grid in a wireless communication system to which the present disclosure may be applied.

Referring to FIG. 4, as an illustrative description, a resource grid is configured with $N_{RB}^{\mu} N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu} N_{symb}^{(\mu)}$ OFDM symbols and $N_{RB}^{\mu} N_{SC}^{RB}$ subcarriers. Here, $N_{RB}^{\mu} \leq N_{RB}^{\max,u}$. The $N_{RB}^{\max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k, l'). Here, $k = 0, \ldots, N_{RB}^{\mu} N_{SC}^{RB} - 1$ is an index in a frequency domain and $l' = 0, \ldots, 2^{\mu} N_{symb}^{(\mu)} - 1$ refers to a position of a symbol in a subframe. When referring to a resource element in a slot, an index pair (k, l) is used. Here, $l = 0, \ldots, 2^{\mu} N_{symb}^{(\mu)} - 1$. A resource element (k, l') for μ and an antenna port p corresponds to a complex value, $a_{k,f}^{(p,\mu)}$. When there is no risk of confusion or when a specific antenna port or numerology is not specified, indexes p and μ may be dropped, whereupon a complex value may be $a_{k,l'}^{(p)}$ or $a_{k,l}$. In addition, a resource block (RB) is defined as $N_{sc}^{RB} = 12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k, 1) for a subcarrier spacing configuration μ in a frequency domain is given as in the following Equation 1.

[Equation 1]

$$n_{CRB}^{\mu} = \left\lfloor \frac{k}{N_{sc}^{RB}} \right\rfloor$$

In Equation 1, k is defined relatively to point A so that k=0 corresponds to a subcarrier centering around point A. Physical resource blocks are numbered from 0 to $N_{BWP,i}^{size,\mu} - 1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

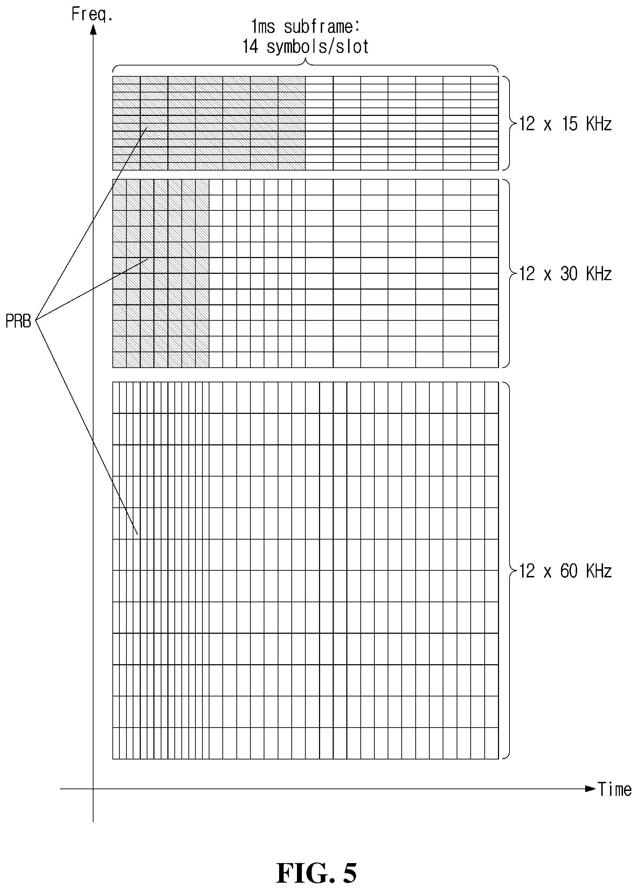

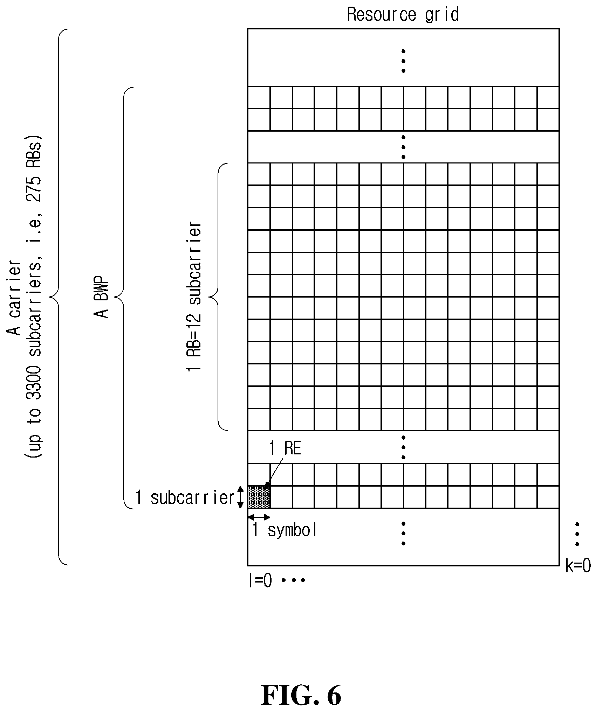

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6 , a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

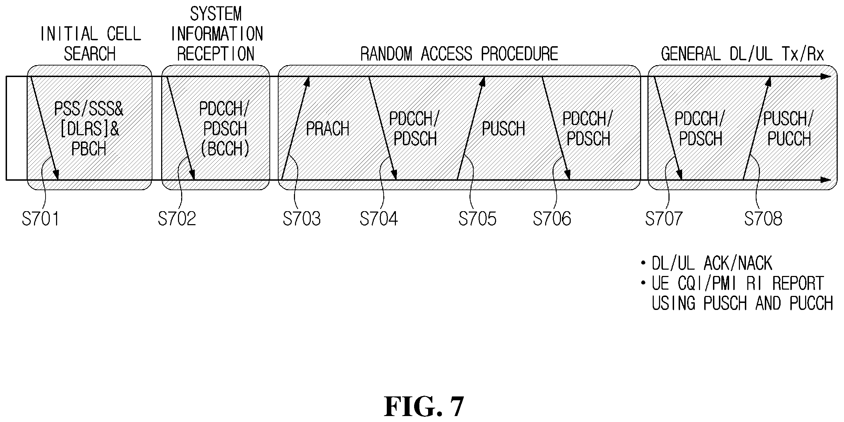

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

Specific embodiments of the present disclosure

The present disclosure relates to a random access procedure in a wireless communication system. Specifically, the present disclosure relates to a technology for improving a random access procedure in a wireless communication system and proposes various embodiments for improving efficiency of a random access procedure by considering an environment in which a limited bandwidth is used.

5G NR provides a service mostly through main technologies such as Enhanced Mobile Boradband (eMBB), Ultra-Reliable and Low Latency Communications (URLLC) and Massive Internet of Things (mIoT). mIoT is a communication method that is optimized to reduce power consumption based on a small size and low power, unlike carrier aggregation (CA) that requires high performance and maximum throughput speed transmission.

In 5G NR, there are three main technologies of URLLC, eMBB and mIoT, and hybrid-type technologies of the three technologies may be provided. In 3GPP release 17, a new device type, which has target use cases of smart factory or wearable devices and requires low power as well as a certain level of transfer rates, is referred to as a reduced performance terminal, that is, a reduced capability (Redcap) UE. Herein, unlike previous types, a Redcap UE or a Redcap terminal uses a narrow spectrum or a narrow bandwidth for a frequency resource.

The present disclosure proposes methods for enhancing the reception rate of message-3 (MSG3) and uplink-related convenience during a PRACH procedure. In addition, the present disclosure describes various embodiments for deriving transmission of an additional reference signal (RS) that is a basis for scheduling of PUSCH later, while transmitting MSG3 at the same time.

Hereinafter, the present disclosure proposes a technology for improving a RACH procedure. Specifically, the present disclosure is directed to enhancing and/or advancing an MSG3-related operation, when a terminal has first access, that is, attempts initial access to a base station in a narrow bandwidth or the terminal performs a RACH procedure on account of radio link failure (RLF) or handover in a connected mode. In other words, the present disclosure proposes a technology for improving reception performance of MSG3 through control signaling and for triggering transmission of MSG3 and additional RS signaling.

Particularly, the present disclosure proposes embodiments for utilizing some of bits of a frequency domain resource allocation (FDRA) field that is preconfigured to mark a frequency area as long as 100 MHz, on the ground that information related to frequence allocation in a narrow bandwidth (e.g., 5 MHz or less) of a narrow band indicates up to 100 MHz but not indicates above. In other words, some of bits of an FDRA field may be utilized for additional control signaling that aims to enhance performance of MSG3 and advance other functions. Thus, call may be stably operated after a PRACH procedure.

In general, an amount of FDRA information indicating resource allocation may be different according to a resource allocation method, but FDRA bits corresponding to approximately 14 to 18 bits are required to indicate a resource allocation of 100 MHz. An FDRA field is typically included in a DCI format 0_X for transmission of a physical downlink shared channel (PDSCH) or a DCI format 1_X for transmission of a physical uplink shared channel (PUSCH) and is used as a means of allocating a dynamic frequence resource. However, from the perspective of uplink grant information of a random access response (RAR) in a RACH procedure, that is, from the perspective of higher-layer RRC signaling for MSG3 in an MAC CE, an FDRA field may be used for RRC connection or RRC connection re-establishment.

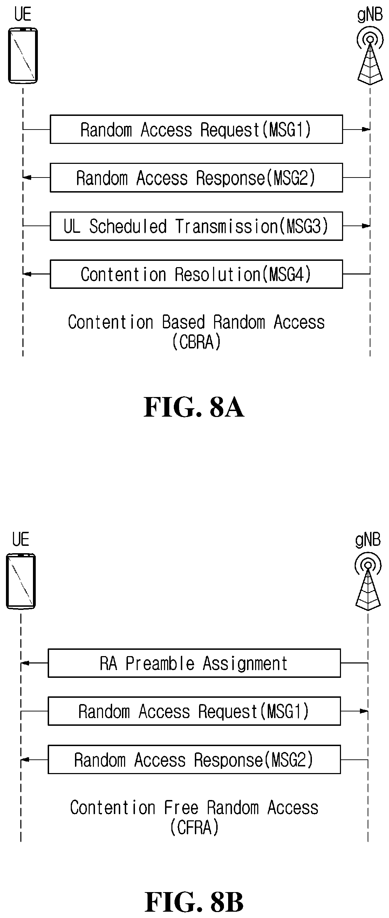

FIG. 8A illustrates an example of a contention-based random access (CBRA) procedure to which the present disclosure is applicable, and FIG. 8B illustrates an example of a contention free random access (CFRA) procedure to which the present disclosure is applicable. Referring to FIG. 8A and FIG. 8B, a CBRA procedure includes transmitting and receiving 4 messages of MSG1, MSG2, MSG3 and MSG4, and a CFRA procedure includes transmitting and receiving 2 messages of MSG1 and MSG2 after random access preamble allocation. A random access response (RAR), which is known as MSG2, includes information related to transmission of MSG3. For example, information related to transmission of MSG3 (S803) is included in uplink grant information in a medium access control (MAC) control element (CE) of a RAR. That is, MSG3 is scheduled not by information of PDCCH but by uplink grant information of MSG2.

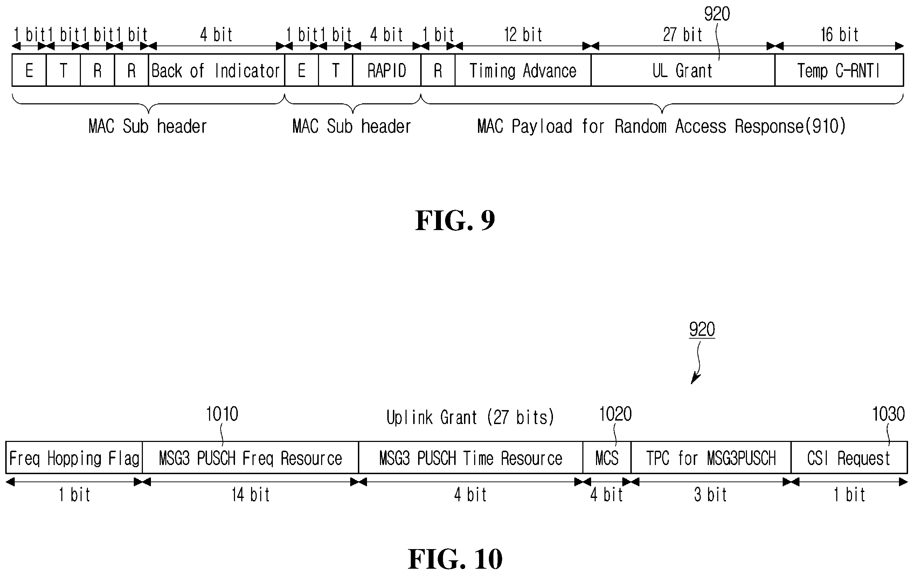

FIG. 9 illustrates an example of a MAC CE structure of MSG2. Referring to FIG. 9, information in simple DCI is included in a MAC CE, and a payload 910 of the MAC CE includes a 27-bit uplink grant field 920. FIG. 10 illustrates an example of an uplink grant field structure of MSG2. Referring to FIG. 9 and FIG. 10, because a size of a payload in a MAC CE is designated, it is not easy to allocate additional bits to the uplink grant field 920 in the payload 910. That is, when an additional bit is intended to be allocated to the uplink grant field 920, it is necessary to reduce a length of at least one field among existing fields. For example, it is possible to consider reducing 4 bits of an MCS field 1020 to 2 bits and using the remaining 2 bits as an MCS indicator. However, in this case, indication of MCS may be restricted.

As a Redcap terminal uses a narrow band, only some of 14 bits of a FDRA field 1010 are used to indicate the narrow band, and the remaining bits are not used. Accordingly, the present disclosure proposes various methods for performing additional control signaling by using at least one FDRA bit, which is saved when a service area less than 20 MHz or 5 MHz is allocated to a terminal, and for keeping a total number of bits of an uplink grant included in a RAR at 27 accordingly.

A Redcap terminal uses a small bandwidth and uses a partial band of a large band used by a general terminal. Accordingly, referring to Table 5 below, the Redcap terminal may know information indicated by a value set in 27 bits in an uplink grant of a RAR. Table 5 below shows a number of bits allocated to each field included in an uplink grant.

[Table 5]

| RAR grant field | Number of bilts |
|---|---|
| frequency hopping flag | 1 |
| PUSCH frequency resource allocation | 14 |
| PUSCH time resource allocation | 4 |
| MCS | 4 |
| TPC command for PUSCH | 3 |
| CSI request | 1 |

Referring to Table 5, FDRA for PUSCH is configured with 14 bits to indicate a frequency of up to 100 MHz. Accordingly, in case a Redcap terminal uses a frequency band equal to or less than 20 MHz or 5 MHz, a required number of bits may be smaller than 14. For example, a frequency band to be allocated for a Redcap service may be equal to or less than 20 MHz or 5 MHz, and in this case, the number of bits used for FDRA for PUSCH may be set as shown in Table 6 below.

[Table 6]

| Bandwidth (BW) | Number of RBs | Required number of bits for FDRA | Number of spare bits |
|---|---|---|---|
| 100MHz | 273 | 14 | 0 |
| 20MHz | 106 | 13 | 1 |
| 5MHz | 25 | 9 | 5 |

Referring to Table 6, as a bandwidth to be allocated is decreased, the required number of bits for FDRA is decreased, and thus an available spare bit is generated. Accordingly, the spare bit of FDRA may be used to signal additional control information related to transmission and reception of MSG3. Furthermore, embodiments described below may also be applied to a shared channel of DCI. In the description below. an available bit generated by reducing a required number of bits for FDRA may be referred to as 'spare bit', 'residual bit', 'remaining bit' or another term with an equivalent technical meaning.

Embodiment# 1: In case a required number of bits for FDRA is reduced, available control information for improving transmission of a shared channel may be included in an FDRA field.

Embodiment 1-1: In case an allocated bandwidth is equal to or less than 5 MHz, 5 bits are generated as spare bits, and thus the following information may be added.

- Information on the number of repetitions: The coverage extension scheme of Release 17 has introduced a method of using only 2 out of 4 bits of an MCS field as illustrated in FIG. 3 for an MCS indicator and using the remaining 2 bits for repetition information of MSG3 in order to improve reliability of MSG3. That is, because it is not easy to define an additional field in an uplink grant of a RAR, the introduced method reduces an amount of information of an existing field and adds information on the number of repetitions of MSG3. However, in this case, the number of available bits for MCS is reduced because of reduction in the amount of information of an MCS field, and a flexibility-related problem may occur accordingly. Therefore, information on the number of repetitions may be included not in some bits of an existing MCS filed but in a spare bit part of FDRA. That is, the number of MCS bits may be kept at 4, and new information on the number of repetitions may be included in a part of an existing FDRA field. Herein, an additional 1 bit may further be needed to indicate whether information on the number of repetitions of MSG3 is included in an existing MCS field or an FDRA field.

- Information related to TB processing over multi-slots PUSCH (TBoMS): TBoMS means a method of transmitting channel-coded bits across slot units, unlike repeated transmission. That is, TBoMS is a method of mapping coded information obtained after LDPC to REs not within one slot but across multiple slots and may provide performance improvement in code rate. According to an embodiment, TBoMS-related information may be included in a spare bit part of an FDRA field.

- SRS request: An SRS request requires 2 bits. An SRS is a reference signal that is transmitted from a terminal to a base station for scheduling of PUSCH, and the base station may obtain an uplink channel state of the terminal based on the SRS. Generally, the SRS may be transmitted in a RRC-connected state. However, the SRS may be transmitted after a RACH procedure by simultaneously triggering MSG3 transmission and SRS transmission for a preconfigured resource of SRS. Thus, the base station may obtain necessary information for scheduling of PUSCH in advance and effectively operation an uplink based on the obtained information.

- Channel state information (CSI) request: A CSI request requires a maximum of 6 bits. According to the previous 4G LTE, a 1-bit CSI request of Table 5 was used. However, in 5G NR, a CSI request is in a reserved state. Accordingly, spare 5 bits generated by an allocated bandwidth equal to or less than 5 MHz may be used for the CSI request together with the reserved 1 bit.

- Information related to sequence initialization of a demodulate reference signal (DMRS): This is information that is additionally indicated when repetition of MSG3 and the discrete fourier transform-spreading-OFDM (DFT- S-OFDM) technique are used. It may be included in a spare bit part of an FDRA field.

- MSG3 modulation scheme-related information: Information indicating a modulation scheme of MSG3 may be included in a spare bit part of an FDRA field. For example, the spare bit part of the FDRA field may include information indicating which of the cyclic prefix-OFDM (CP-OFDM) scheme or the DFT-S-OFDM scheme is to be used to modulate MSG3. In other words, information indicating a waveform of MSG3 may be indicated through a spare bit of the FDRA field.

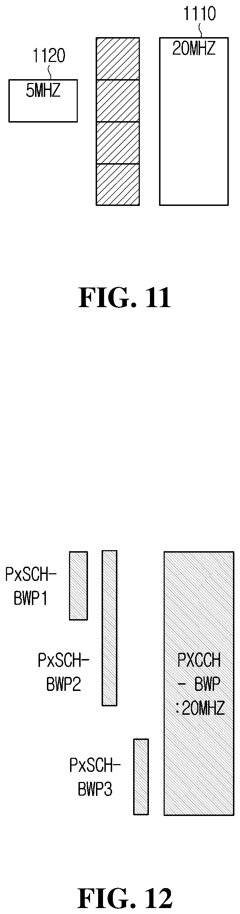

- Partitioned band location information: In case 5 MHz out of a 20 MHz channel bandwidth is allocated for PUSCH, information indicating which part of 20 MHz corresponds to the allocated 5 MHz may be include in a spare bit part of an FDRA field. That is, information indicating an allocated band in a channel bandwidth may be indicated through a spare bit of the FDRA field. FIG. 11 illustrates a partitioning example of a shared channel bandwidth in a wireless communication system according to an embodiment of the present disclosure. For example, as illustrated in FIG. 11, in case a bandwidth of 20 MHz 1110 is partitioned by 5 MHz, and the partitioned 5 MHz 1120 is allocated, partitioned band location information indicating which part of 20 MHz 1110 corresponds to the allocated 5 MHz 1120 may be included the spare bit part of the FDRA field.

As illustrated in FIG. 11, allocating a channel bandwidth by partitioning it at an equal interval may be applied not only to an uplink through an uplink grant of a RAR but also to MSG2, MSG3, MSG4 and/or MSG5 of a RACH procedure in a limited manner, and relevant information may be included in a spare bit part of an FDRA field within DCI. A BWP of a shared channel is 5 MHz in initial access, but this may be modified through an SIB and modified while a terminal is in a connected state.

In case a shared channel bandwidth is 5 MHz and a whole channel bandwidth is 20 MHz, the whole channel bandwidth of 20 MHz may be partitioned into 4 equal parts, and a form of operation is possible such that information on the partitioned bandwidth may be transmitted as information on a shared channel (e.g., PDSCH, PUSCH). In this case, 2-bit information is necessary to indicate which of the 4 partitions is to be used as the shared channel. Accordingly, 2-bit information on a location of the shared channel may be included in a spare bit part of an FDRA.

According to an embodiment, a shared channel may be configured not by partitioning a whole channel bandwidth into predetermined sizes but by a higher layer. That is, the shared channel may be configured into a plurality of BWPs by a higher layer, and the plurality of BWPs may be indicated as PxSCH-BWPs or bandwidth partitions and be distinguished by respective allocated IDs. In this case, an ID of the shared channel may be indicated through spare bits of an FDRA. As illustrated in FIG. 12, a BWP of a shared channel may be set for a control channel. FIG. 12 illustrates an example of PxSCH-BWP in a wireless communication system according to an embodiment of the present disclosure. Irrespective of a downlink channel, an uplink channel, a data channel or a non-data channel, a plurality of BWPs may be configured, each of which may be allocated an ID. An ID of each BWP may be designed by an MAC or DCI. However, for allocation to a terminal, a rule for controlling allocation not a plurality of BWPs but only one BWP may be configured or predefined.

As described above, a portion of an FDRA field within an uplink grant of MSG2 may be defined as spare bits, and additional information may be signaled through the spare bits. Herein, the additional information is different information from information indicating a resource allocated on a frequence axis for transmission of MSG3 delivered through FDRA and may be understood as information for assisting a subsequence communication operation like MSG3 reception.

Furthermore, the above-described Embodimen#1 may be applied not only to MSG3 of a RACH procedure but also to a typical shared channel (e.g., PDSCH, PUSCH). Embodiment#1 may also be applied to various DCI formats.

Embodiment#2: 1 bit of a CSI request related to CSI reporting in an uplink grant of a RAR is used for signaling different information.

4G LTE defines CSI reporting to be controlled in a last bit field of an uplink grant during a CFRA procedure. For example, as illustrated in FIG. 10, an uplink grant includes a 1-bit CSI request field 1030. This is because 1 bit is required for CSI triggering of DCI of LTE. However, in LTE-A pro, the number of bits for CSI triggering of DCI increases up to 6. Meanwhile, NR defines a CSI triggering-related bit as a reserved state, and the bit is not used. Accordingly, in order to enhance reception performance of MSG3, a bit of a CSI request field requesting CSI reporting in an uplink grant may be used.

According to various embodiments, 1 bit of a CSI request field within an uplink grant may be used for the following purposes.

- Indication of information on TBoMs
- Indication of additional information related to repetition: the number of repetitions for MSG3 or the number of repetitions for subsequent another data transmission
- Sequence initialization of DMRS: This is information that may be additionally notified in a situation of repeating MSG3 and in a DFT-S-OFDM situation. The information may be transmitted using a bit of a CSI request field.
- To additionally display other information, 1-bit information related to a CSI request may be grouped and signaled. In this case, other information may be indicated by using a method of connecting a corresponding bit to spare bits of FDRA. For example, a control indication method related to the spare bits of FDRA may be included.
- Indication of one modulation scheme of CP-OFDM or DFT-S-OFDM

As described above, a CSI request field within an uplink grant of MSG2 may be defined as a spare bit, and additional information may be signaled through the spare bit. Herein, the additional information is different information from information indicating CSI feedback delivered through the CSI request field and may be understood as information for assisting a subsequence communication operation like MSG3 reception.

Embodiment#3: A new uplink grant with 27 or more bits may be designed. For example, instead of an existing uplink grant limited to 27 bits, a new uplink grant with 27 or more bits may be designed by adding a new field for efficiency of Redcap. A new uplink grant included in a RAR may be designed to have a different structure from a form of an existing uplink grant. When the new uplink grant is designed, not only Redcap but also another form of service may be additionally considered.

As illustrated in FIG. 9 and FIG. 10, a size of an uplink grant of a current RAR is fixed to 27 bits. Accordingly, for additional functions related to transmission of MSG3, in case an uplink grant is designed in a new form with 27 or more bits, further performance improvement is expected. For example, when a new uplink grant is designed, at least one of the following information fields may be added. Herein, an uplink grant of a RAR may be understood to perform the role of DCI 0_X that determines a transmission scheme of MSG3 in a RACH procedure.

- Field for expressing a larger number of repetitions than a designated number of repetitions
- Additional information field for a case in which uplink beam-related additional information needs to be notified to a terminal
- Information field related to TBoMS
- Information field related to triggering SRS transmission
- Information field related to carrier indication: As a PxSCH BWP information filed, PxSCH BWP information may be information based on FIG. 11 or FIG. 12.
- Information field related to control signaling for additional functions related to performance improvement of MSG3
- Information field indicating one modulation scheme of CP-OFDM or DFT-S-OFDM

Embodiment#4: Embodiment for an assumed situation related to early indication

In a RACH procedure, for an uplink grant included in a RAR of MSG2 prior to transmission of MSG3, a process in which a terminal informs a base station of whether or not the above-described Embodiment#1 to Embodiment#3 are applicable may be needed.

- Embodiment 4-1: In case of CBRA, it is impossible for a terminal to transmit capability information to a base station before a RACH procedure during an initial access process. Accordingly, in case of CBRA, the base station may configure beforehand a resource related to Redcap or some resources related to a narrow bandwidth by partitioning a preamble of a PRACH or using a RACH occasion. In other words, some of available preamble sequences may be allocated to indicate whether or not the above-described Embodiment#1 to Embodiment#3 are applicable, or some of configured RACH occasions may be allocated to indicate whether or not the above-described Embodiment#1 to Embodiment#3 are applicable. Next, in case a RACH preamble is received from the terminal on a RACH occasion of a configured resource, the base station may determine that at least one of the above-described Embodiment#1 to Embodiment#3 are applicable to MSG3 of the terminal. In this case, the base station may indicate MSG3-related information in a RAR uplink grant of MSG2.

- Embodiment 4-2: As Embodiment 4-1 should maintain a configuration of PRACH-related resource, it has a problem that long-term efficiency is low. Accordingly, an uplink bandwidth part for Redcap of Release 17 or Redcap of Release 18 may be designated to a different location through SIB1 from the beginning. To this end, unlike the existing legacy uplink BWP, a separate initial UL BWP may be designated to be used initially by a terminal for a service with a narrow bandwidth. In this case, in relation to Redcap of Release 18, a plurality of separate initial UL BWPs may be configured. For example, a 20 MHz band may be configured as a separate initial UL BWP, the separate initial UL BWP may be partitioned into 4 equal 5 MHz sub-UL bandwidths, and thus four 4 separate initial 5 MHz sub-UL BWPs may be configured. Herein, by designating each of the 4 separate initial sub-UL BWPs, whether or not CE function is supported, whether or not TBoMS function is supported, and/or one of many types of the terminal, the terminal may be configured to transmit a PRACH in a corresponding separate initial sub-UL BWP. The base station may identify an indication of the type and capability of the terminal through the separate initial sub-UL BWPs and a RACH occasion.

For example, referring to FIG. 11, a terminal supporting CE function may start PRACH transmission at a first 5 MHz, and terminals supporting the CE function and TBoMS function may start PRACH transmission at a second 5 MHz. A base station may confirm that the terminal transmitting a RACH preamble at the first 5 MHz supports the CE function and the terminals transmitting a RACH preamble at the second 5 MHz support the CE function and the TBoMS function.

- Embodiment 4-3: In case of CFRA, because a terminal and a base station are RRC-connected and the base station or a network knows capability information of the terminal, the base station may know in advance which information is to be transmitted to the terminal through a RAR uplink grant of MSG2. Accordingly, the schemes of Embodiment#1, Embodiment#2 and Embodiment#3 are not applied to every RACH procedure but may be limited to application to a RACH procedure of CFRA according to situations.

According to an embodiment, the above Embodiment 4-1 and Embodiment 4-2 may be applied at the same time. For example, the RACH occasion partitioning method of Embodiment 4-1 may be used for early indication of CE, and Embodiment 4-2 may be used to indicate information on Redcap.

Additionally, a terminal supporting both Redcap and CE function (or TBoMS) may inform a base station of capability of the terminal based on such a scheme as shown in CASE 1 or CASE 2 below.

- CASE 1: In case a terminal has two or more capabilities, the terminal may transmit a RACH preamble through a RACH occasion corresponding to its capability (e.g., whether it supports CE function or TBoMS function), among RACH occasions corresponding to different capabilities, in a separate initial UL BWP signaled through an SIB dedicated to Redcap, instead of in an existing initial UL BWP.
- CASE 2: Some of resources corresponding to a CE or Redcap-related RACH occasion corresponding to an existing initial UL BWP may be redundantly allocated to a CE or Redcap through an SIB.

Embodiment#5: Additional proposals related to contents of MSG3

A terminal may include additional information other than existing information in MSG3 and transmit the MSG3 to a base station through a PUSCH. Thus, channels for the terminal may be operated from an earlier time than when terminal capability information is transmitted to the base station after RRC connection between the terminal and the base station.

At least one of the following types of information may be included in a PUSCH of MSG3.

- Whether or not half duplex (HD)-frequency division duplex (FDD) is supported.
- Antenna or MIMO information: whether or not a reception antenna is configured as a single antenna, whether or not only a single layer is supported, etc.
- Form factor type information: Form factor type information is information indicating performance difference according to a type of a device (e.g., IoT device, wearable device), and one example may be information showing that performance is worse by approximately 3 dB.
- Feature information of BWP: Information on a BW or BWP of a downlink and/or uplink
- Information regarding whether or not CB and TBoMS functions are supported
- Type information of a device

The above-listed information is generated in a higher layer and may be generated particularly in a MAC layer or RRC layer.

Embodiment#6: Operation schemes for designation of a BW(P) of each channel and co-existence between a radio frequency (RF) and a baseband (BB) that have different BWs

In case a terminal uses a narrow band of 3GPP Release 18, a downlink and an uplink may be operated with different bandwidth sizes by setting 20 MHz for the downlink and 5 MHz for the uplink (e.g., by setting one BWP of up to 5 MHz or limiting the uplink to a 5 MHz BW). Such operation with different bandwidth sizes of downlink and uplink may be applied from an initial phase up to a connected mode and an inactive state. A scheme for operating a downlink bandwidth and an uplink bandwidth differently may achieve a frequency diversity effect in a 20 MHz downlink and use a low-cost 5 MHz power amplifier module (PAM) in an uplink. Generally, the width of a frequency band used tends to be inversely proportional to the cost.

In case, in a BW(P), a maximum bandwidth of a downlink is greater than a bandwidth of an uplink (e.g., the downlink has 20 MHz and the uplink has 5 MHz), a base station may use an offset to indicate an uplink band based on a downlink band, thereby enabling uplink transmission of a terminal. The offset may be expressed in a RB(G) unit. The offset may be indicated by using spare bits of FDRA or other additional bits. That is, the offset may be added to DCI or a RAR uplink grant. In this case, a maximum uplink bandwidth may be 5 MHz, and the uplink bandwidth may be understood as a partitioning BW of the whole 20 MHz BW.

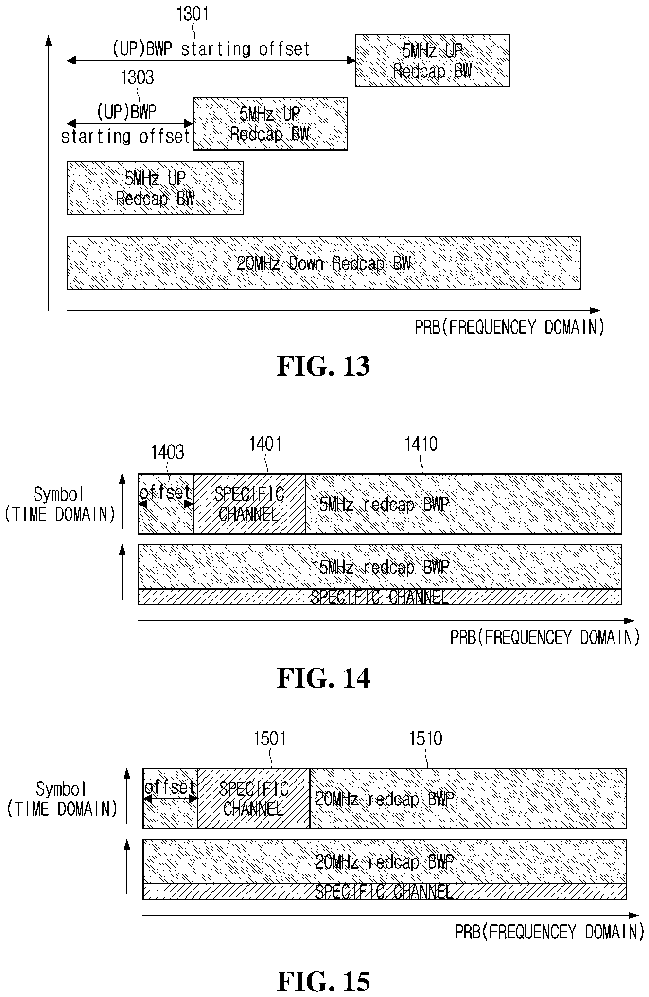

The above-described embodiment may be applied similarly to a case in which a maximum bandwidth of an uplink is greater than a downlink. For example, in FIG. 13, the uplink and the downlink may be changed. In other words, embodiments described below may also be applied to a case in which a downlink bandwidth is limited and an allocated downlink BWP or bandwidth partitioning is indicated by an offset based on an uplink BWP or channel bandwidth. FIG. 13 illustrates an example of a channel bandwidth operation scheme for uplink and downlink in a wireless communication system according to an embodiment of the present disclosure. Referring to FIG. 13, when a downlink bandwidth is 20 MHz and an uplink bandwidth is 5 MHz, the uplink bandwidth may be indicated by using starting offsets 1301 and 1303 for the downlink bandwidth.

A starting offset for indicating an uplink bandwidth may be set based on a bandwidth of a specific channel or based on an existing BW(P). FIG. 14 illustrates an example of a channel BW(P) of uplink and downlink in a wireless communication system according to an embodiment of the present disclosure. Referring to FIG. 14, a redcap BWP is illustrated to be 15 MHz. Herein, an offset 1403 indicating a starting position of a bandwidth of a specific channel 1401 is set based on a redcap BWP 1410 of 15 MHz.

TDD may be expressed as in FIG. 14. However, according to TS 38.101, FDD has a TX-RX separate band. In case a downlink band and an uplink band are separated like in FDD, the uplink and the downlink may have a broadly same bandwidth size. Herein, BWPs may have different sizes between the uplink and the downlink. In Redcap according to Release 18, a plurality of BWPs may be introduced as described above. Sizes and/or locations of BWPs may be configured based on a specific bandwidth for an additional channel within a whole BWP. For example, as illustrated in FIG. 15, a BW(P) 1501 and a location of a specific channel within a 20 MHz BW(P) 1510 may be configured in a higher layer beforehand. The BW(P) 1501 and location of a specific channel may be changed in real time by PDSCH, PUSCH or DCI. For example, within a whole BWP, a 5 MHz PxSCH, a 5 MHz PUCCH, a 5 MHz PRACH, a 20 MHz SRS, a 20 MHz CSI-RS, and a 10 MHz control resource set (CoreSet) may be configured in a higher layer.

FIG. 15 illustrates a configuration example of BW(P) of a specific channel in a wireless communication system according to an embodiment of the present disclosure. Referring to FIG. 15, based on separate TX-RX as shown in Table 7, an offset for uplink may be indicated. An offset may be indicated according to each channel and become a negative value in this case. An offset for uplink may be set based on a channel bandwidth or be set within a BW(P) as illustrated in FIG. 15.

Of course, a corresponding channel is not indicated by an offset alone. That is, as proposed in Embodiment#1, in a higher layer, a plurality of BWPs or bandwidth partitioning and relevant IDs may be configured for a PxSCH, which is a data-related channel, and a RACH, an SRS and a PxCCH that are control-related channels, and the BWPs and IDs thus configured may be indicated semi-statically or dynamically through a MAC CE or DCI. In a higher layer such as DCI related to semi-persistent scheduling (SPS) or configured grant (e.g., CG-grant or SPS-DCI) or RRC, one PxSCH-BWP, PxSCH-bandwidth partitioning, PxCCH-BWP/bandwidth partitioning, or PxCCH-partitioning may be designated in advance.

[Table 7]

| NR Operatinb Band | TX-RX carrier centre frequency separation |
|---|---|
| n1 | 190MHz |
| n2 | 80MHz |
| n3 | 95MHz |
| n5 | 45MHz |

(continued)

| NR Operatinb Band | TX-RX carrier centre frequency separation |
| --- | --- |
| n7 | 120MHz |
| n8 | 45MHz |
| n12 | 30MHz |
| n14 | -30MHz |
| n18 | 45MHz |
| n20 | -41MHz |
| n25 | 80MHz |
| n26 | 45MHz |
| n28 | 55MHz |
| n30 | 45MHz |
| n65 | 190MHz |
| n66 | 400MHz |
| n70 | 300MHz |
| n71 | -46MHz |
| n74 | 48MHz |
| n91 | 570MHz-595MHz(NOTE 2) |
| n92 | 575MHz-680MHz($\mu$=0) 580MHz-675MHz($\mu$=1) (NOTE 2) |
| n93 | 517MHz-547MHz (NOTE 2) |
| n94 | 522MHz-632MHz($\mu$=0) 527MHz-627MHz($\mu$=1) (NOTE 2) |
| NOTE 1: Void |  |
| NOTE 2: The range of TX-RX frequency separation given paired UL and DL channel bandwidths $BW_{UL}$ and $BW_{DL}$ is given by the respective lower and upper limit $F_{DL\_low} - F_{UL\_high} + 0.5(BW_{DL} + BW_{UL})$ and $F_{DL\_high} - F_{UL\_low} -0.5(BW_{DL} + BW_{UL})$. The UL and DL channel bandwidth combinations specified in Table 5.3.5-1 and 5.3.6-1 depend on the subcarrier spacing configuration $\mu$.[6]. |  |

In case a BW of each channel for uplink is operated differently, it is possible to consider a method of indicating a BW of each channel through an offset. For example, if a PRACH and a PUSCH are operated in 5 MHz and an SRS is operated in 20 MHz, an offset may be set based on a partitioning concept not for BWP but for BW.

- In a scheme for operating a 20 MHz BW(P) only for an uplink channel for an SRS, the concept of XX_BWP may be introduced for a shared channel and a PRACH, and a maximum bandwidth of a corresponding BWP is 5 MHz. Herein, XX_BWP is a dedicated BWP for a RACH procedure and may be referred to as 'RACH-BWP'.
- In a scheme for operating a 5 MHz BWP (or partition) for an uplink channel for PUSCH, SRS, PRACH and PUCCH, based on offsets of FIG. 13 to FIG. 15, only a specific channel may be designated to use 5 MHz from a starting RB of a maximum 20 MHz BWP.
- An offset may be set in a RB unit. For example, the offset may be set beforehand in a higher layer in granularity that is a resource block group (RBG). For PxSCH, FDRA information and an offset value of granularity may be indicated through DCI or MAC CE.
- An offset may be set in a unit that indicates one of 4 equal partition bandwidths of 20 MHz. For example, an SRS has a whole BW of 20 MHz but may be operated to use only a maximum of 5 MHz in transmitting one OFDM symbol.
- An offset list may be transmitted in RRC beforehand, and an index of the offset list may be dynamically transmitted through DCI or semi-statically transmitted through MAC CE. In another scheme, an offset list may be semi-statically transmitted through MAC CE.

- An offset unit and/or name according to each channel may be differently configured according to an operation of a corresponding channel.
- In case a bandwidth of PUSCH or PDSCH is limited to 5 MHz, a 5 MHz bandwidth may be configured contiguously or non-contiguously. A method of contiguously configuring a bandwidth is the same method as the above-described XX_BWP, and herein, an uplink may be limited a maximum of 5 MHz BW(P) from the beginning. A method of non-contiguously configuring a bandwidth may be understood as a method of reducing a size of soft buffer by considering throughput (T-put) for a 5 MHz BW. In case repeated transmission is performed to extend coverage, an offset for 5 MHz may be set according to each slot. In case a whole bandwidth exceeds 20 MHz, transmission may be configured to be performed only at up to 5 MHz through modular arithmetic. A shared channel may be allocated by RA type 0 and RA type 1, which are two schemes for allocating RBs of frequency resources. The RA type 0 is a scheme for allocating a RB based on a bitmap, and the RA type 1 is a scheme for allocating a RB based on a resource indication value (RIV).

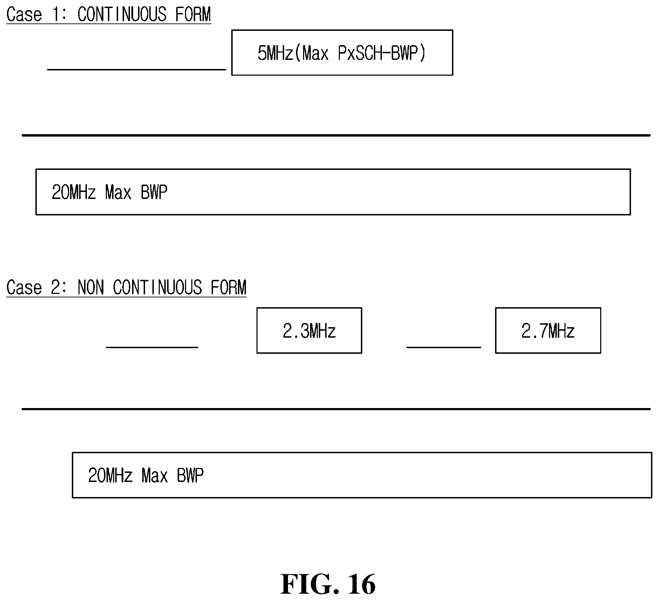

FIG. 16 illustrates an example of allocation scheme of PxSCH in a wireless communication system according to an embodiment of the present disclosure. Referring to FIG. 16, a shared channel may be configured as a 5 MHz continuous BW like in Case 1 or be configured as non-continuous BWs like in Case 2.

The RA type 0 based on a bitmap may be configured such that, among available RBGs, a total RBG size, which is a sum of BWs of RBGs with an FDRA bit arrangement value of 1, does not exceed a 5 MHz BW. According to an embodiment, the above-described scheme may be applied only to downlink. Alternatively, the RA type 0 based on a bitmap may be configured such that 0 is not present between 1 and 1 in a bitmap of RBG, 1 is present contiguously and thus a contiguous 5 MHz BW is configured as a shared channel, as in Case 1 of FIG. 16.

A total number of REGs may be configured not to exceed the number of RBs a 5 MHz channel bandwidth defined in RAN4. Alternatively, a total number of REGs may be defined based on a maximum number of RBs for a corresponding BW. For example, in the case of a 30 KHz SCS, a total number of RBGs may be defined by 12 PRBs.

In the case of RA type 1, that is, an interleaved type, a length of localized resource blocks, which are contiguously allocated resource blocks, is used only as much as a 5 MHz RB. According to an embodiment, a scheme for mapping a virtual resource block (VRB) to a physical resource block (PRB) (VRB-to-PRB mapping) may not be applied to uplinks. In this case, the above-described offset may be replaced by a starting RB.

The RIV-based RA type 1 may restrict a BWP of 5 MHz or less to operate only for Redcap in a downlink or uplink. However, a maximum length of LRBs may be configured not to exceed the number of RBs within a 5 MHz channel bandwidth, as defined in RAN4 of Table 8. Alternatively, a maximum length of LRBs may be newly defined by a maximum number of RBs.

Table 8 below shows a maximum number of available RBs according to a bandwidth and a subcarrier spacing (SCS).

[Table 8]

| SCS (kHz) | 5MHz | 10MHz | 15MHz | 20MHz | 25MHz | 30MHz | 40MHz | 50MHz | 60MHz | 80MHz | 90MHz | 100MHz |
|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | 270 | N/A | N/A | N/A | N/A |
| 30 | 11 | 24 | 38 | 51 | 65 | 78 | 106 | 133 | 162 | 217 | 245 | 273 |
| 60 | N/A | 11 | 18 | 24 | 31 | 38 | 51 | 65 | 79 | 107 | 121 | 135 |

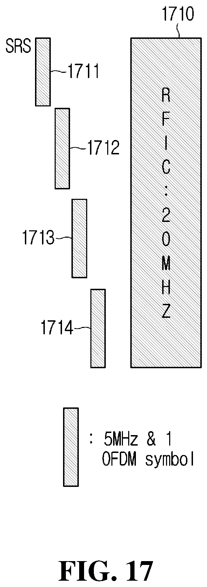

In case a BW(P) for uplink is limited to 5 MHz, even if RFIC can use 20 MHz, an SRS may be transmitted at up to 5 MHz. However, because an SRS is also used for downlink channel analysis of TDD, transmission may be needed for up to 20 MHz. FIG. 17 illustrates an example of an SRS transmission scheme in a wireless communication system according to an embodiment of the present disclosure. As illustrated in FIG. 17, contagious 4 OFDM symbols of an SRS may be controlled to be transmitted through different 5 MHz bandwidths 1711, 1712, 1713 and 1714 respectively within a limited 20 MHz 1710.

Embodiment#7: Other embodiments

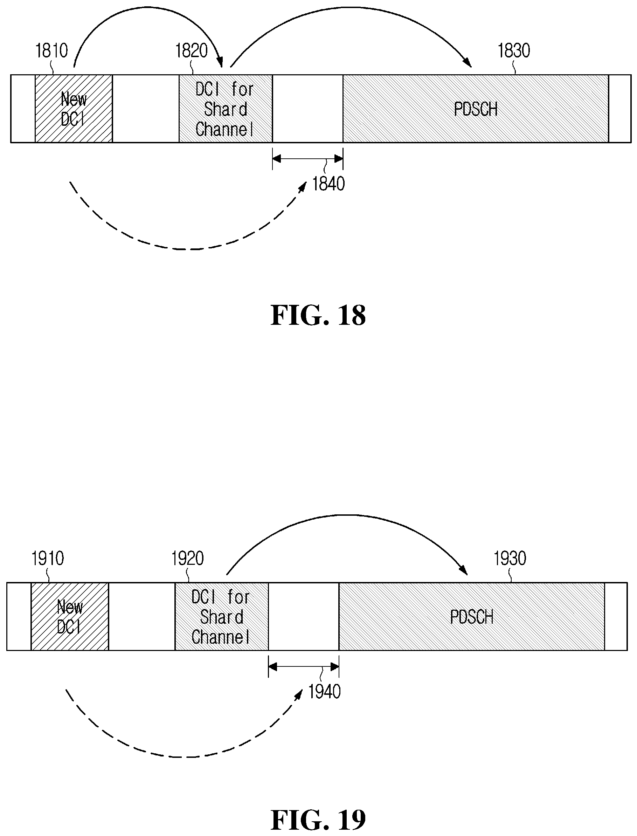

- Embodiment 7-1: Not only MSG3-related information but also information on repetition of PxSCH may be added to spare bits of the FDRA field described in Embodiment#3. In this case, a quick response to coverage extension may be dynamically possible.
- Embodiment 7-2: In case a plurality of partition bandwidths for a plurality of PxSCH-BWP/bandwidth partitionings, a PxCCH-BWP, or a PDCCH, a PUCCH, an SRS, and a RACH are configured in a higher layer, one BWP may be set to default, and the remaining BWPs may be set to an active or inactive state. Herein, only one PxSCH-BWP/bandwidth partitioning and only one PxCCH-BWP/bandwidth partitioning may be set to the active state, and these may be designated by an MAC CE or DCI. In this case, if they are scheduled for over a predetermined time based on a specific timer or are not used for over a predetermined time, they may be designated to go back to default PxSCH or PxCCH-BWP. This is the same as the existing timer operation scheme for BWP of every channel.
- A dedicated BWP for PUCCH and PDCCH may be set to 5 MHz or more according to channels.
- A plurality of PxCCH-BWP/bandwidth partitionings and a plurality of PxSCH-BWP/bandwidth partitionings are configured within a BWP, switching may occur to them. To this end, a switching gap may be defined. The switching gap may be set to 0, a predefined value, or a value set by a higher layer.
- For each of individual channels like PRACH, PDCCH, PUCCH and SRS, a plurality of PxCCH-BWPs may be configured. PxCCH-BWP/bandwidth partitioning may be understood to collectively refer to RACH-BWP, PDCCH-BWP, SRS-BWP or PUCCH-BWP.
- Active PxCCH-BWP/bandwidth partitioning of each channel of PxCCH-BWP may be designated through a MAC CE. For example, through a MAC CE, an ID of active PxCCH-BWP/bandwidth partitioning may be transmitted, or a bitmap indicating PxCCH-BWP/bandwidth partitioning may be transmitted.
- BWP/bandwidth partitioning of PxCCH-BWP/bandwidth partitioning and PxSCH-BWP/bandwidth partitioning may be referred to by using such terms as RB subset or contiguous RBG.
- When a PxSCH is scheduled by using a PDCCH, the PDCCH and the PxSCH should not be transmitted in a same slot. This is because the PDCCH and the PxSCH have different BWPs and thus a buffering issue may occur in each slot. Accordingly, in the case of DCI 1_X of a PDSCH, a gap of slot indicating a difference between a slot for transmitting the PDCCH and a slot for transmitting the PxSCH may be added to a spare bit part of an FDRA field. Alternatively, the gap of slot may be predetermined in a RRC, which is a higher layer, or be indicted semi-statically in a MAC CE. For example, new DCI as illustrated in FIG. 18 and FIG. 19 may be replaced by a MAC CE. In this case, time domain resource allocation (TDRA) of DCI may be applied from a slot indicated by a gap. Alternatively, transmission slots of a PDCCH and transmission slots of a PDSCH may be predetermined in a higher layer. In case of TDD, transmission is possible only through a downlink OFDM symbol within a D slot for downlink or an S slot that is a special slot.
- Relaxation is needed for a table where default values are defined for values of K0 and K2 related to existing TDRA. This is directed to avoiding a case in which a PDCCH and a PxSCH are defined to be received in a same slot.
- Embodiment 7-1: A new table is defined.
- Embodiment 7-2: Additional latency of a specific slot is defined in an existing table.
- Embodiment 7-3: For K0 and K1, a value exceeding 1 is always designated.

Generally, a PDCCH is used to schedule a PxSCH. A PDCCH for notifying a PDCCH scheduling a PxSCH may be newly designed. New DCI, which is newly designed, may be referred to as DCI X_X. The new DCI may include at least one of information related to scheduling of a PDCCH scheduling a PxSCH and information on a slot spacing from a PDSCH that is scheduled by the PDCCH. Furthermore, a new PDCCH may include additional information related to a PDCCH for a wake up signal (WUS) or a PDCCH used for paging early indication (PEI).

FIG. 18 illustrates an example for an operation scheme of new DCI in a wireless communication system according to an embodiment of the present disclosure. Referring to FIG. 18, new DCI 1810 may include information related to scheduling of DCI 1820 scheduling a PDSCH 1830, that is, DCI 1820 for a shared channel and information 1840 on a slot spacing between the DCI 1820 for the shared channel and the PDSCH 1830 scheduled by the DCI 1820.

The information 1840 on the slot spacing included in the new DCI 1810 may be continuously applied until next new DCI 1810 is transmitted. That is, the information 1840 on the slot spacing included in the new DCI 1810 is continuously applied to the DCI 1820 on a shared channel, which is transmitted after the new DCI 1810 is transmitted, and the PDSCH 1830 scheduled by the DCI 1820. As illustrated in FIG. 19, new DCI may be additionally transmitted when another gap slot is required.

FIG. 19 illustrates an example for an operation scheme of new DCI in a wireless communication system according to an embodiment of the present disclosure. Referring to FIG. 19, new DCI 1910 may include information on a modified slot spacing between DCI 1920 on a shared channel a PDSCH 1930 scheduled by the DCI 1920.

As described above, because a Redcap terminal uses a narrow bandwidth of 5 MHz, some bits of an FDRA field, which is configured based on existing 100 MHz, may not be used for resource allocation. Accordingly, according to embodiments of the present disclosure, among bits of an FDRA field, spare bits that are not used for resource allocation may be used for additional control signaling. In addition, 5G NR does not use 1 bit that is designated for an existing CSI request. Accordingly, according to embodiments of the present disclosure, 1 bit designated for the existing CSI request may be used for additional control signaling.

In a general call situation, a RACH procedure should satisfy a requirement for quick access performance in a situation like an initial access process or radio failure or a handover situation. Various embodiments of the present disclosure enable reception performance of MGS3 in a RACH procedure to be improved and various failures in a radio connected situation to be quickly handled. In addition, a call access rate may be enhanced. In addition, improvements of cost and power consumption may be obtained through an efficient operation scheme for BWP of a PxCCH in an FDRA-related PxSCH.

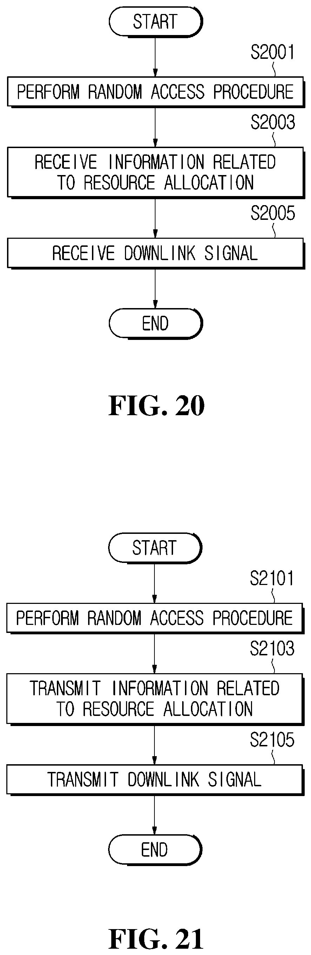

FIG. 20 illustrates an example of a procedure of receiving a downlink signal in a wireless communication system according to an embodiment of the present disclosure. FIG. 20 exemplifies a method for operating a terminal.

Referring to FIG. 20, at step S2001, a terminal performs a random access procedure. Specifically, the terminal may obtain system information from a base station, transmit a random access preamble to the base station based on random access-related information obtained from the system information, and receive a random access response message from the base station. In addition, the terminal performs signaling for establishing a connection with the base station. Although not illustrated in FIG. 20, prior to this step, the terminal may receive a synchronization signal block (SSB) including at least one synchronization signal through a synchronization cell search operation and obtain synchronization with a base station based on the synchronization signal.

At step S2003, the terminal receives information related to resource allocation for downlink communication. The received information may include at least one of scheduling information and configuration information for performing communication and at least one of physical layer signaling, a MAC CE and higher layer signaling. Based on the received information, the terminal identifies an allocated resource for downlink communication. For example, the received information may include information indicating a plurality of non-continuous resources in frequency domain. Herein, a sum of RBs of the plurality of non-continuous resources may be equal to or smaller than a maximum number of RBs of the terminal. Herein, the maximum number of RBs may be understood as the number of RBs corresponding to a limited bandwidth configured for the terminal. For example, if the limited bandwidth is 5 MHz, the maximum number of RBs may be 28, 27 or 25, when a 15 kHz SCS is used, or may be 14, 13, 12 or 11, when a 30 kHz SCS is used.

At step S2007, the terminal receives a downlink signal. Specifically, the terminal receives the downlink signal based on resource allocation included in the received information. For example, the terminal may receive the downlink signal through a plurality of resources that are allocated non-continuously.

As described with reference to FIG. 20, a terminal may receive a signal through downlink resources that are allocated non-continuously. Herein, according to other embodiments, non-continuous allocation of resources may be applied not only to downlink communication but also to uplink communication.

FIG. 21 illustrates an example of a procedure of transmitting a downlink signal in a wireless communication system according to an embodiment of the present disclosure. FIG. 21 exemplifies a method for operating a base station.

Referring to FIG. 21, at step S2101, a base station performs a random access procedure. Specifically, the base station may receive a random access preamble transmitted from a terminal in one of RACH occasions included in a RACH resource indicated by system information and transmit a random access response message to the terminal. In addition, the base station performs signaling for establishing a connection with the terminal. Although not illustrated in FIG. 21, prior to this step, the base station may transmit an SSB including at least one synchronization signal.

At step S2103, the base station transmits information related to resource allocation for downlink communication. The transmitted information may include at least one of scheduling information and configuration information for performing communication and at least one of physical layer signaling, a MAC CE and higher layer signaling. For example, the transmitted information may include information indicating a plurality of non-continuous resources in frequency domain. Herein, a sum of RBs of the plurality of non-continuous resources may be equal to or smaller than a maximum number of RBs of the terminal. Herein, the maximum number of RBs may be understood as the number of RBs corresponding to a limited bandwidth configured for the terminal. For example, if the limited bandwidth is 5 MHz, the maximum number of RBs may be 28, 27 or 25, when a 15 kHz SCS is used, or may be 14, 13, 12 or 11, when a 30 kHz SCS is used.

At step S2105, the base station transmits a downlink signal. Specifically, the base station transmits the downlink signal to the terminal based on the resource allocation indicated by the transmitted information. For example, the base station may transmit the downlink signal to the terminal through a plurality of resources that are non-continuously allocated.

As described with reference to FIG. 21, a base station may transmit a signal through allocated downlink resources. Herein, according to other embodiments, non-continuous allocation of resources may be applied not only to downlink communication but also to uplink communication.

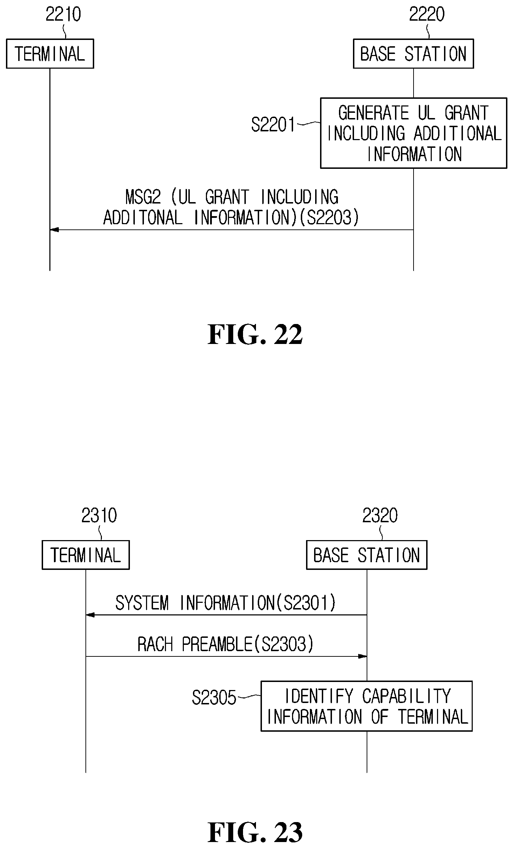

FIG. 22 illustrates an example of a procedure of transmitting additional information by using MSG2 of a random access procedure in a wireless communication system according to an embodiment of the present disclosure.

Referring to FIG. 22, at step S2001, a base station 2220 generates an uplink grant including additional information. According to an embodiment, the additional information may include at least one of information on the number of repetitions of MSG3, TBoMS-related information, SRS request information, CSI request information, sequence initialization information of DMRS, information related to a modulation scheme of MSG3, and partitioning band location information. According to an embodiment, the additional information may be included in a spare bit of FDRA of the uplink grant or a CSI request bit of the uplink grant. For example, the additional information may be included in a spare bit part of the FDRA field 1010 among fields in the 27-bit uplink grant 920 as illustrated in FIG. 9 or in the CSI request field 1030. According to an embodiment, the base station 2220 may be configured to design a new uplink grant with 27 bits or more and add additional information in the new uplink grant.

At step S2203, the base station 2220 transmits MSG2 including the uplink grant to a terminal 2210. In other words, the base station 2220 transmits a random access response, which is MSG2 including the uplink grant, to the terminal 2210. The uplink grant includes additional information.

FIG. 23 illustrates an example of a procedure of exchanging terminal information by using a random access preamble in a wireless communication system according to an embodiment of the present disclosure.

Referring to FIG. 23, at step S2301, a base station 2320 transmits system information. For example, the base station 2320 transmits a master information block (MIB) and at least one system information block (SIB). Thus, the base station 2320 transmits information necessary for a terminal 2310 to access the base station 2320 and information for performing a procedure for communication with the base station 2320 to the terminal 2310. For example, the system information may include information indicating RACH occasions. Each of the RACH occasions corresponds to a different resource with a bandwidth below a threshold bandwidth in frequency domain. According to an embodiment, the base station 2320 may divide all frequency bands for PRACH into a plurality of bandwidths and transmit, to the terminal 2310, system information indicating that each of the plurality of divided bandwidths corresponds to a different RACH occasion. According to an embodiment, the base station 2320 may configure a separate initial UL BWP, which a terminal may initially use for a narrowband service, divide the separate initial UL BWP into a plurality of sub-BWPs, and transmit, to the terminal 2310, system information indicating that each of the sub-BWPs corresponds to a different RACH occasion. Herein, the base station 2320 may designate at least one piece of terminal capability information for each of the separate initial sub-UL BWPs. For example, the base station 2320 may map whether or not a CE function is supported, whether or not a TBoMS function is supported, and/or one of multiple types of the terminal to each of the RACH occasions or the sub-BWPs.

At step S2303, the terminal 2310 transmits a RACH preamble. The terminal 2310 selects one of the RACH occasions included in a RACH resource indicated by the system information and transmits the RACH preamble in the selected RACH occasion. According to an embodiment, the terminal 2310 may identify capability information mapped to each of the RACH occasions and select a RACH occasion based on the capability information. That is, the terminal 2310 may select a RACH occasion corresponding to its capability information among the RACH occasions. For example, in case the terminal supports a CE function, PRACH transmission may start in a RACH occasion of a separate initial sub-UL BWP to which the CE function is mapped, and in case the terminal supports both the CE function and a TBoMS function, PRACH transmission may start in a RACH occasion of a separate initial sub-UL BWP to which the CE function and the TBoMS function are mapped.

At step S2305, the base station 2320 identifies the capability information of the terminal based on the RACH occasion in which the RACH preamble is received. In other words, the base station 2320 may identify a function supported by the terminal based on the RACH occasion in which the RACH preamble is received. For example, in case the RACH preamble is received in a RACH occasion of a separate initial sub-UL BWP to which the CE function is mapped, the base station 2320 may identify that the terminal supports the CE function. In case the RACH preamble is received in a RACH occasion of a separate initial sub-UL BWP to which the CE function and the TBoMS function are mapped, the base station 2320 may identify that the terminal supports both the CE function and the TBoMS function.

In the description referring to FIG. 23, the base station 2320 may identify capability information of the terminal 2310 through a RACH occasion, in which a RACH preamble is received, and perform the procedure of FIG. 22 based on the capability information.

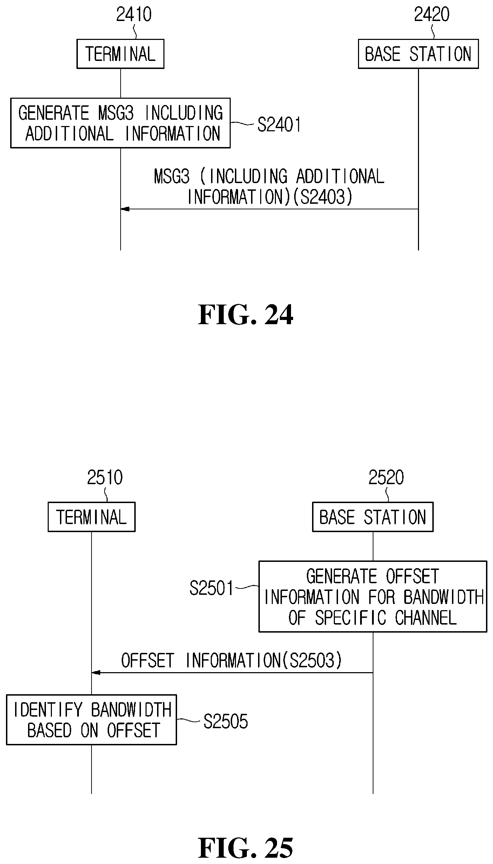

FIG. 24 illustrates an example of a procedure of transmitting additional information by using MSG3 of a random access procedure in a wireless communication system according to an embodiment of the present disclosure.

Referring to FIG. 24, at step S2401, a terminal 2410 generates MSG3 including additional information. In other words, the terminal 2410 may include additional information other than existing information in MSG3 and transmit MSG3 to a base station through a PUSCH. For example, the additional information may include at least one of whether or not HD-FDD is performed, antenna or MIMO information, form factor information, feature information of BWP, information regarding whether or not CE and TBoMS functions are supported, or type information of a device.

At step S2403, the terminal 2410 transmits MSG3 including the additional information to a base station 2420. Next, the terminal 2410 and the base station 2420 may perform a procedure for establishing connection. In addition, the terminal 2410 and the base station 2420 may perform communication based on the additional information.

FIG. 25 illustrates an example of a procedure of indicating a bandwidth in a wireless communication system according to an embodiment of the present disclosure. Hereinafter, a procedure described with reference to FIG. 25 may be understood as a partial operation of a random access procedure.

Referring to FIG. 25, at step S2501, a base station 2520 generates offset information for a bandwidth of a specific channel. The base station 2520 may operate an uplink and a downlink in different bandwidth sizes. For example, the bandwidth of the uplink may be operated as the existing 20 MHz, and the bandwidth of the downlink may be operated as a partial band of 20 MHz (e.g., 5 MHz or less). Accordingly, based on an uplink channel bandwidth, the base station 2520 may generate offset information indicating the bandwidth of an downlink channel allocated to a terminal 2510. An offset may be set in a RB unit and be set in a unit indicating one of divided bandwidths. Alternatively, it may be represented by an index in a preset offset list.

At step S2503, the base station 2520 transmits the offset information to the terminal 2510. The base station 2520 may transmit the offset information to the terminal 2510 by using a spare bit of FDRA or another additional bit.

At step S2505, the terminal 2510 identifies an allocated bandwidth based on the offset information. The terminal 2510 may obtain bandwidth information for a specific channel based on the offset information received from the base station 2520.

In the description referring to FIG. 25, it is assumed that a downlink bandwidth is smaller than an uplink bandwidth, but an example of a bandwidth indication procedure described with reference to FIG. 25 may also be applied to an opposite case. For example, the bandwidth indication procedure of FIG. 25 may be applied likewise to a case in which an uplink bandwidth is smaller than a downlink bandwidth.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

Industrial Applicability

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method for operating a terminal in a wireless communication system, the method comprising:

performing a random access procedure;
receiving information related to resource allocation for downlink communication; and
receiving a downlink signal based on the resource allocation,
wherein the resource allocation is a plurality of non-contiguous resources in frequency domain, and a sum of resource blocks (RBs) of the plurality of resources is equal to or smaller than a maximum number of RBs of the terminal.

2. The method of claim 1, wherein the maximum number of RBs includes a number of RBs corresponding to a limited bandwidth configured for the terminal.

3. The method of claim 1, wherein the number of RBs corresponding to the limited bandwidth is included.

4. The method of claim 1, wherein the performing of the random access procedure comprises, receiving a random access response (RAR) message including an FDRA field including additional information, and
wherein the additional information includes at least one of information on a number of repetitions of message-3 (MSG3), information related to TB Processing over Multi-Slots PUSCH (TBoMS), a sounding reference signal (SRS) request, a channel state information (CSI) request, information related to sequence initialization of a demodulate reference signal (DMRS), information related to a waveform of MSG3, and information indicating a band allocated for a shared channel within a channel bandwidth.

5. The method of claim 1, wherein the performing of the random access procedure comprises, receiving a random access response (RAR) message including a CSI request field including additional information, and
wherein the additional information includes at least one of the information on the number of repetitions of MSG3, the information related to TBoMS, the SRS request, the information related to sequence initialization of DMRS, the information related to the waveform of MSG3, and the information indicating the band allocated for the shared channel within the channel bandwidth.

6. The method of claim 1, wherein the performing of the random access procedure comprises, receiving a random access response (RAR) message including an uplink grant, and
wherein the uplink grant includes at least one of information related to an uplink beam, the information related to TBoMS, the SRS request, the information related to sequence initialization of DMRS, the information related to the waveform of MSG3, and the information indicating the band allocated for the shared channel within the channel bandwidth.

7. The method of claim 1, wherein the performing of the random access procedure comprises, transmitting a random access preamble through a random access channel (RACH) occasion that is configured for the terminal to indicate use of the limited bandwidth.

8. The method of claim 1, wherein the performing of the random access procedure comprises, transmitting the random access preamble through an initial bandwidth part (BWP) that is configured for devices using the limited bandwidth.

9. The method of claim 8, wherein the initial BWP includes a plurality of sub-BWPs, and
wherein the sub-BWPs are selectively used according to a type or capability information of a device transmitting the random access preamble.

10. The method of claim 1, wherein the performing of the random access procedure comprises, transmitting MSG3 including at least one of information regarding whether or not half duplex (HD)-frequency division duplex (FDD) is supported, information related to antenna, information related to a form factor type, information related to a BWP of the terminal, information regarding whether or not coverage enhancement (CE) is supported, and information regarding whether or not a TBoMS function is supported.

11. The method of claim 1, further comprising:
receiving information related to an offset relative to a downlink band for indicating a location of an uplink band, based on an uplink bandwidth being smaller than a downlink bandwidth.

12. The method of claim 11, wherein the information related to the offset is included in an FDRA field of a random access response that is received during the random access procedure.

13. A method for operating a base station in a wireless communication system, the method comprising:

performing a random access procedure;
transmitting information related to resource allocation for downlink communication; and
transmitting a downlink signal to a terminal based on the resource allocation,
wherein the resource allocation is a plurality of non-contiguous resources in frequency domain, and a sum of resource blocks (RBs) of the plurality of resources is equal to or smaller than a maximum number of RBs of the terminal.

14. A terminal in a wireless communication system, the terminal comprising:

a transceiver; and
a processor coupled with the transceiver,
wherein the processor is configured to:

perform a random access procedure,
receive information related to resource allocation for downlink communication, and
receive a downlink signal based on the resource allocation, and
wherein the resource allocation is a plurality of non-contiguous resources in frequency domain, and a sum of resource blocks (RBs) of the plurality of resources is equal to or smaller than a maximum number of RBs of the terminal.

15. A base station in a wireless communication system, the base station comprising:

a transceiver; and
a processor coupled with the transceiver,
wherein the processor is configured to:

perform a random access procedure,
transmit information related to resource allocation for downlink communication, and
transmit a downlink signal to a terminal based on the resource allocation, and
wherein the resource allocation is a plurality of non-contiguous resources in frequency domain, and a sum of resource blocks (RBs) of the plurality of resources is equal to or smaller than a maximum number of RBs of the terminal.

16. A communication device comprising:

at least one processor; and
at least one computer memory coupled with the at least one processor and storing an instruction that instructs operations when executed by the at least one processor,
wherein the operations comprises:

performing a random access procedure;
receiving information related to resource allocation for downlink communication; and
receiving a downlink signal based on the resource allocation, and
wherein the resource allocation is a plurality of non-contiguous resources in frequency domain, and a sum of resource blocks (RBs) of the plurality of resources is equal to or smaller than a maximum number of RBs of the terminal.

17. A non-transitory computer-readable medium storing at least one instruction, the non-transitory computer-readable medium comprising the at least one instruction that is executable by a processor,
wherein the at least one instruction controls a device to:

perform a random access procedure,
receive information related to resource allocation for downlink communication, and
receive a downlink signal based on the resource allocation, and
wherein the resource allocation is a plurality of non-contiguous resources in frequency domain, and a sum of resource blocks (RBs) of the plurality of resources is equal to or smaller than a maximum number of RBs of the

terminal.

FIG. 1

**FIG. 2**

**FIG. 3**

One Subframe

$14 \cdot 2^{\mu}$ OEDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

**FIG. 4**

Freq.

1ms subframe:
14 symbols/slot

12 x 15 KHz

PRB

12 x 30 KHz

12 x 60 KHz

Time

**FIG. 5**

Resource grid

A carrier
(up to 3300 subcarriers, i.e, 275 RBs)

A BWP

1 RB=12 subcarrier

1 RE

1 subcarrier

1 symbol

l=0 · · ·

k=0

## FIG. 6

INITIAL CELL SEARCH → PSS/SSS& [DLRS]& PBCH — S701

SYSTEM INFORMATION RECEPTION → PDCCH/ PDSCH (BCCH) — S702

RANDOM ACCESS PROCEDURE → PRACH (S703), PDCCH/ PDSCH (S704), PUSCH (S705), PDCCH/ PDSCH (S706)

GENERAL DL/UL Tx/Rx → PDCCH/ PDSCH (S707), PUSCH/ PUCCH (S708)

• DL/UL ACK/NACK
• UE CQI/PMI RI REPORT
  USING PUSCH AND PUCCH

**FIG. 7**

EP 4 572 503 A1

**FIG. 8A**

**FIG. 8B**

| 1 bit | 1 bit | 1 bit | 1 bit | 4 bit | 1 bit | 1 bit | 4 bit | 1 bit | 12 bit | 27 bit | 920 | 16 bit |
|---|---|---|---|---|---|---|---|---|---|---|---|---|
| E | T | R | R | Back of Indicator | E | T | RAPID | R | Timing Advance | UL Grant | | Temp C-RNTI |

MAC Sub header      MAC Sub header      MAC Payload for Random Access Response(910)

## FIG. 9

920

Uplink Grant (27 bits)

| Freq Hopping Flag | 1010 MSG3 PUSCH Freq Resource | MSG3 PUSCH Time Resource | 1020 MCS | TPC for MSG3PUSCH | 1030 CSI Request |
|---|---|---|---|---|---|
| 1 bit | 14 bit | 4 bit | 4 bit | 3 bit | 1 bit |

## FIG. 10

1110
20MHZ

1120
5MHZ

**FIG. 11**

PxSCH‑
BWP1

PxSCH‑
BWP2

PXCCH
‑ BWP
:20MHZ

PxSCH‑
BWP3

**FIG. 12**

1301

(UP)BWP starting offset

5MHz UP
Redcap BW

1303

(UP)BWP
starting offset

5MHz UP
Redcap BW

5MHz UP
Redcap BW

20MHz Down Redcap BW

PRB(FREQUENCEY DOMAIN)

**FIG. 13**

1403　　　1401　　　　　1410

Symbol
(TIME DOMAIN)

offset | SPECIFIC
CHANNEL | 15MHz redcap BWP

15MHz redcap BWP
SPECIFIC CHANNEL

PRB(FREQUENCEY DOMAIN)

**FIG. 14**

1501　　　　　1510

Symbol
(TIME DOMAIN)

offset | SPECIFIC
CHANNEL | 20MHz redcap BWP

20MHz redcap BWP
SPECIFIC CHANNEL

PRB(FREQUENCEY DOMAIN)

**FIG. 15**

Case 1: CONTINUOUS FORM

5MHz(Max PxSCH-BWP)

20MHz Max BWP

Case 2: NON CONTINUOUS FORM

2.3MHz     2.7MHz

20MHz Max BWP

# FIG. 16

1710

SRS

1711

1712

1713

1714

R
F
I
C
:
2
0
M
H
Z

: 5MHz & 1
OFDM symbol

# FIG. 17

1810       1820       1830

New DCI    DCI for Shard Channel    PDSCH

1840

**FIG. 18**

1910       1920       1930

New DCI    DCI for Shard Channel    PDSCH

1940

**FIG. 19**

START

S2001

PERFORM RANDOM ACCESS PROCEDURE

S2003

RECEIVE INFORMATION RELATED
TO RESOURCE ALLOCATION

S2005

RECEIVE DOWNLINK SIGNAL

END

**FIG. 20**

START

S2101

PERFORM RANDOM ACCESS PROCEDURE

S2103

TRANSMIT INFORMATION RELATED
TO RESOURCE ALLOCATION

S2105

TRANSMIT DOWNLINK SIGNAL

END

**FIG. 21**

2210

TERMINAL

2220

BASE STATION

S2201 — GENERATE UL GRANT INCLUDING ADDITIONAL INFORMATION

MSG2 (UL GRANT INCLUDING ADDITONAL INFORMATION)(S2203)

**FIG. 22**

2310

TERMINAL

2320

BASE STATION

SYSTEM INFORMATION(S2301)

RACH PREAMBLE(S2303)

S2305 — IDENTIFY CAPABILITY INFORMATION OF TERMINAL

**FIG. 23**

2410                                                      2420

| TERMINAL |                              | BASE STATION |

GENERATE MSG3 INCLUDING
ADDITIONAL INFORMATION            S2401

MSG3 (INCLUDING ADDITIONAL
INFORMATION)(S2403)

## FIG. 24

2510                                                      2520

| TERMINAL |                              | BASE STATION |

GENERATE OFFSET
S2501    INFORMATION FOR BANDWIDTH
OF SPECIFIC CHANNEL

OFFSET INFORMATION(S2503)

IDENTIFY BANDWIDTH
BASED ON OFFSET            S2505

## FIG. 25

## INTERNATIONAL SEARCH REPORT

| International application No. |
|---|
| **PCT/KR2023/011850** |

| **A.** | **CLASSIFICATION OF SUBJECT MATTER** |
|---|---|

**H04W 74/00**(2009.01)i; **H04W 74/08**(2009.01)i; **H04L 5/00**(2006.01)i; **H04L 5/14**(2006.01)i; **H04B 7/0413**(2017.01)i; **H04W 8/22**(2009.01)i

According to International Patent Classification (IPC) or to both national classification and IPC

| **B.** | **FIELDS SEARCHED** |
|---|---|

Minimum documentation searched (classification system followed by classification symbols)

H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 액세스(random access), 자원 할당(resource allocation), RB, 제한된 대역폭 (reduced bandwidth)

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X<br>Y | CMCC. Discussion on further reduced UE complexity. R1-2204315, 3GPP TSG RAN WG1 #109-e. 29 April 2022.<br>See pages 1-8 and table 13-1. | 1-3,7-10,13-17<br>4-6,11-12 |
| Y | MODERATOR (ZTE CORPORATION). Feature lead summary #3 on support of Type A PUSCH repetitions for Msg3. R1-2200714, 3GPP TSG RAN WG1 #107bis-e. 25 January 2022.<br>See pages 9, 46, 49 and 71-73. | 4-6,11-12 |
| Y | MODERATOR (ZTE CORPORATION). Final feature lead summary on support of Type A PUSCH repetitions for Msg3. R1-2106247, 3GPP TSG RAN WG1 #105-e. 27 May 2021.<br>See pages 27 and 32. | 12 |
| A | LENOVO. Potential solutions to further reduce UE complexity. R1-2204504, 3GPP TSG RAN WG1 Meeting #109-e. 29 April 2022.<br>See pages 1-3. | 1-17 |

| ✓ Further documents are listed in the continuation of Box C. | ✓ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2023** | **15 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/011850** |

### C.    DOCUMENTS CONSIDERED TO BE RELEVANT

| Category* | Citation of document, with indication, where appropriate, of the relevant passages | Relevant to claim No. |
|---|---|---|
| A | KR 10-2022-0007516 A (KT CORPORATION) 18 January 2022 (2022-01-18) See paragraphs [0119]-[0241] and figure 10. | 1-17 |

Form PCT/ISA/210 (second sheet) (July 2022)

**INTERNATIONAL SEARCH REPORT**
Information on patent family members

International application No.

**PCT/KR2023/011850**

| Patent document cited in search report | | | Publication date (day/month/year) | Patent family member(s) | | | Publication date (day/month/year) |
|---|---|---|---|---|---|---|---|
| KR | 10-2022-0007516 | A | 18 January 2022 | EP | 3937571 | A1 | 12 January 2022 |
| | | | | US | 11689999 | B2 | 27 June 2023 |
| | | | | US | 2022-0015019 | A1 | 13 January 2022 |

Form PCT/ISA/210 (patent family annex) (July 2022)